(19) Europäisches Patentamt / European Patent Office / Office européen des brevets

(11) **EP 3 315 776 B1**

(12) **EUROPEAN PATENT SPECIFICATION**

(45) Date of publication and mention
of the grant of the patent:
**27.11.2019 Bulletin 2019/48**

(51) Int Cl.:
**F04B 51/00** *(2006.01)*    **F04B 49/06** *(2006.01)*
**G01F 1/34** *(2006.01)*

(21) Application number: **17195939.8**

(22) Date of filing: **11.10.2017**

(54) **RECIPROCATING COMPRESSOR FLOW SENSING**

KOLBENKOMPRESSORDURCHFLUSSMESSUNG

DÉTECTION DE DÉBIT DE COMPRESSEUR ALTERNATIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.10.2016 US 201615290746**

(43) Date of publication of application:
**02.05.2018 Bulletin 2018/18**

(73) Proprietor: **AI ALPINE US BIDCO INC.
Wilmington, Delaware 19801 (US)**

(72) Inventors:
• **ZURLO, James Richard
Waukesha, WI 53188 (US)**
• **FREUND, Sebastian
85748 Garching bei München (DE)**

(74) Representative: **Torggler & Hofinger
Patentanwälte
Postfach 85
6010 Innsbruck (AT)**

(56) References cited:
**US-A- 4 705 459       US-A1- 2016 223 422
US-A1- 2016 230 755**

**Description**

BACKGROUND

The subject matter disclosed herein relates to reciprocating compressors and, more specifically, to a system and method for estimating flow based on detecting operating events (e.g., valve closures) of a reciprocating compressor.

Reciprocating compressors may include a piston driven to move back and forth within a chamber, such that fluid (e.g., gas) is drawn into and compressed within the chamber. For example, a portion of the chamber may be disposed above the piston. As the piston moves in a first direction (e.g., away from the portion of the chamber), a volume of the portion increases, thereby drawing gas into the portion of the chamber above the piston, for example, through a suction valve. As the piston moves in a second direction opposite to the first direction (e.g., toward the portion of the chamber), the volume of the portion decreases, thereby compressing the gas within the portion of the chamber. After a pressure of the compressed gas exceeds a threshold, a discharge valve may open such that the compressed gas is exported from the portion of the chamber elsewhere and for other purposes. US4705459A discloses systems, methods, and non-transitory media for monitoring a reciprocating compressor by determining a valve opening of a valve disposed in the reciprocating compressor using a sensor and determining a first location of a piston of the reciprocating compressor at the valve opening, by determining a valve closing of the valve using the sensor and determining a second location of the piston at the valve closing, and by estimating a volumetric efficiency based at least in part on the first and second location.

In some configurations, the compressors may have an adjustable volume. Operation of variable-volume and constant-volume compressors may be sensed using a sensing system. However, direct measurement using flow sensors through individual compressors may be impractical due to the cost prohibitive nature or unreliability of individual flow sensors over a period of time.

BRIEF DESCRIPTION

Certain embodiments commensurate in scope with the originally claimed invention are summarized below.

In a first embodiment, a method for monitoring reciprocating compressor operation includes determining a valve opening of a valve disposed in the reciprocating compressor using a sensor and determining a first location of a piston of the reciprocating compressor at the valve opening. The method also includes determining a valve closing of the valve using the sensor and determining a second location of the piston at the valve closing. Furthermore, the method includes estimating a volumetric efficiency based at least in part on the first and second location, and to increase RPM for the compressor if the volumetric efficiency is below a threshold value.

In a second embodiment, a system includes a reciprocating compressor having a piston and a valve. The system also includes a controller configured to monitor valve closures of the valve. The controller includes a processor configured to receive an indication of the valve opening from a sensor coupled to the reciprocating compressor and determine a first location of the piston at the valve opening. The processor is also configured to receive an indication of the valve closing from the sensor and determine a second location of the piston at the valve closing. The processor is configured to then estimate a volumetric efficiency based at least in part on the first and second location, and to increase RPM for the compressor if the volumetric efficiency is below a threshold value.

In a third embodiment, a non-transitory computer readable medium includes executable instructions that, when executed, cause a processor to receive an indication of a valve opening of a valve of a reciprocating compressor from a sensor coupled to the reciprocating compressor and determine a first location of a piston of the reciprocating compressor at the valve opening. The instructions also cause the processor to receive an indication of the valve closing from the sensor and determine a second location of the piston at the valve closing. The instructions also cause the processor to estimate a volumetric efficiency for the reciprocating compressor based at least in part on the first and second location, and to increase RPM for the compressor if the volumetric efficiency is below a threshold value.

BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:

FIG. 1 is a schematic cross-sectional illustration of an embodiment of a reciprocating compressor having vibration sensors, in accordance with an aspect of the present disclosure;

FIG. 2 is a schematic cross-sectional illustration of an embodiment of the reciprocating compressor and the vibration sensors of FIG. 1, in accordance with an aspect of the present disclosure;

FIG. 3 is an embodiment of a production curve for a reciprocating compressor, in accordance with aspects of the present disclosure;

FIG. 4 is an embodiment of a graph of sensor data showing sensed valve events, in accordance with aspects of the present disclosure;

FIG. 5 is a schematic view of an embodiment of a bore through which a piston travels during operation of the reciprocating compressor of FIG. 1, in accordance with aspects of the present disclosure; and

FIG. 6 is a flow diagram of a process for monitoring operation of a reciprocating compressor, in accordance with aspects of the present disclosure.

DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The disclosed embodiments employ sensors (e.g., vibration sensors, acoustic sensors, or vibration sensors) that may be used to indirectly determine flow and/or volumetric efficiency of a compressor without knowing the geometry of a variable volume of the compressor. The sensors may measure baseline data (e.g., fingerprints of sound or vibration) to monitor, diagnose, and/or control a reciprocating compressor, more specifically, suction and discharge valves of the reciprocating compressor. When using a vibration sensor to monitor a reciprocating compressor, occasionally the vibration sensor system records a noise, such as an abnormal or undesired noise that may not be identified at that time. Additionally or alternatively, the vibration sensor may record a noise that is a normal or desired noise, where the noise has been previously identified and characterized. For example, noises emitted by the reciprocating compressor during various actions by the reciprocating compressor may be initially characterized during an in-factory baselining process. Noise signals for particular operating events and conditions (e.g., discharge and/or suction valve closures) during the baselining process may be processed and stored in a database as relating to one or more operating events. During normal operation of the reciprocating compressor, data stored in the database relating to the operating events characterized during the baselining process may be accessed to determine if operational noise corresponds to the operating events characterized during the baselining process.

Advantageously, the techniques described herein may create a sound "fingerprint" of certain reciprocating compressor sounds or noise. The fingerprint (e.g., profile, comparator, and/or reference signal) may be developed during the baselining process, as described above, and the fingerprint may correspond to a particular operating event (e.g., a valve opening or closure) tested during the baselining process. It should be noted that the baselining process may be carried out during full operation of the reciprocating compressor or while only operating certain components (e.g., the components relating to the operating event(s) being baselined) of the reciprocating compressor. For example, in some embodiments, various operating events of the reciprocating compressor may be baselined in-factory during part or full operation.

During full operation of the reciprocating compressor (e.g., after baselining), noise may be detected by the vibration sensor or vibration sensors, and a resulting noise signal may be processed and compared to various fingerprints (e.g., profiles, signatures, comparators, reference signals, unique indicia, unique representations, etc.) relating to the reciprocating compressor. If the fingerprint and the processed noise signal correspond or correlate (e.g., "match"), the signal may be confirmed as corresponding to the operating event (e.g., valve closure) relating to the fingerprint. The noise signal may also be processed to determine time-sensitive information relating to the operating event that corresponds to the matched fingerprint and noise signal. For example, if the noise signal matches a fingerprint corresponding to closure of a suction or discharge valve, the noise signal may be plotted with respect to time to determine when, e.g., the discharge or suction valve closed.

Further, in accordance with embodiments of the present disclosure, the noises recorded or detected by the sensor(s) (e.g., knock or proximity sensors) may capture multiple operating events, namely, opening or closing of multiple suction and/or discharge valves of the reciprocating compressor. The amplitudes of the noise signals corresponding with the opening or closing of the suction and/or discharge valves may be plotted against time/movement of a piston and used to determine flow rate and/or volumetric efficiency of the reciprocating compressor. For example, a period of time may be monitored between closures of different suction and/or discharge valves, and the distance traveled by the piston between the opening and the closing events may be compared to an overall stroke of the piston to determine volumetric efficiency. Volumetric efficiency may be used to determine flow. These parameters may be used to determine health and/or tune operating parameters (e.g., volume and/or RPM).

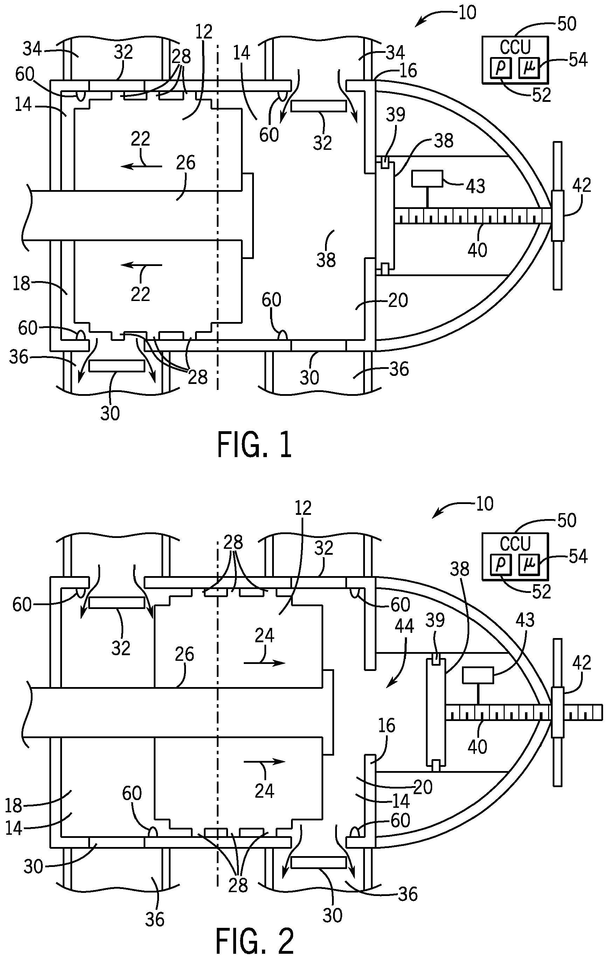

Turning to the drawings, FIGS. 1 and 2 illustrate cross-section diagrams of an embodiment of a portion of a variable displacement reciprocating compressor 10 having a piston 12 disposed in a chamber 14 of a cylinder 16, where the chamber 14 includes two sections 18, 20, one on either side of the piston 12. For example, in FIG. 1, the piston 12 is moving in a first direction (indicated by arrows 22) toward the first section 18 and away from the second section 20, while in FIG. 2, the piston 12 is moving in a second direction (indicated by arrows 24) toward the second section 20 and away from the first section 18.

To actuate the piston 12, a shaft 26 may extend from an actuating source (not shown) into the cylinder 16 and through the piston 12. The shaft 26 may be rigidly coupled with, or integral to, the piston 12. Further, the actuating source (not shown) may be any suitable actuating source, including a crankshaft driven by a motor. In general, the actuating source causes reciprocating motion of the shaft 26 and corresponding piston 12 in the first direction 22 and in the second direction 24.

As shown in the illustrated embodiments, the piston 12 separates the chamber 14 into the two discrete sections 18, 20. In other words, the sections 18, 20 may be fluidly isolated from one another. The piston 12 may include rings 28 that engage or contact walls of the cylinder 16 to seal the first section 18 of the chamber 14 from the second section 20 of the chamber 14.

The reciprocating compressor 10 may also include a series of valves coupled with the sections 18, 20 of the chamber 14. For example, the reciprocating compressor 10 in the illustrated embodiments includes two discharge valves 30 and two suction valves 32. In other embodiments, the reciprocating compressor may include more than the two discharge valves 30 and more than the two suction valves 32, depending on how many of the sections 18, 20 are included in the chamber 14 of the reciprocating compressor 10, and/or depending on how many cylinders 16 (and, thus, how many corresponding chambers 14 and pistons 12) are included in the reciprocating compressor 10. As shown, each section 18, 20 of the chamber 14 includes one of the discharge valves 30 and one of the suction valves 32.

Continuing with the embodiment illustrated in FIG. 1, as the piston 12 moves away from the second section 20 of the chamber 14, a size (e.g., volume) of the second section 20 increases. The volume increase of the second section 20 of the chamber 14 causes a pressure differential (e.g., vacuum) between the fluid in second section 20 of the chamber 14 and a suction manifold 34 coupled with the second section 20 of the cylinder 16 at the suction valve 32. As the pressure differential exceeds a threshold pressure associated with the suction valve 32, the suction valve 32 opens, enabling fluid communication between the suction manifold 34 and the second section 20 of the chamber 14. After the suction valve 32 opens, the pressure differential also causes fluid (e.g., air) to be drawn (e.g., sucked) into the second section 20 of the chamber 14 through the suction valve 32 of the second section 20. Accordingly, the second section 20 fills with the fluid (e.g., air).

Further, as the piston 12 moves toward the first section 18 of the chamber 14 in FIG. 1, a volume of the first section 18 decreases. Thus, fluid (e.g., air) within the first section 18 is compressed as the piston 12 moves toward the first section 18. After the fluid pressure (e.g., air pressure) of the fluid within the first section 18 of the chamber 14 exceeds a threshold pressure of the discharge valve 30 associated with the first section 18, the discharge valve 30 opens. As the discharge valve 30 opens, the discharge valve 30 enables fluid communication between the first section 18 of the chamber 14 and an discharge manifold 36 coupled with the cylinder 16 at the discharge valve 30. Due to the pressure differential between the fluid in first section 18 of the chamber 14 and in the discharge manifold 36, the compressed fluid (e.g., compressed air) within the first section 18 flows toward and into the discharge manifold 36. The compressed fluid is then exported elsewhere for other purposes. For example, the compressed fluid may be utilized by oil refineries, gas pipelines, chemical plants, natural gas processing, refrigeration plants, air separation plants, biogas, fertilizer production, gas lift, hydrotreatment, polymer production, underground gas storage, or any other suitable system or method.

Continuing with the embodiment illustrated in FIG. 2, as the piston 12 moves away from the first section 18 of the chamber 14, the size (e.g., volume) of the first section 18 increases. The volume increase of the first section 18 of the chamber 14 causes a pressure differential (e.g., vacuum) between the fluid (e.g., air) in the first section 18 of the chamber 14 and the suction manifold 34 coupled with the first section 18 of the cylinder 16 at the suction valve 32. As the pressure differential exceeds a threshold pressure associated with the suction valve 32, the suction valve 32 opens, enabling fluid communication between the suction manifold 34 and the first section 18 of the chamber 14. After the suction valve 32 opens, the pressure differential also causes fluid (e.g., air) to be drawn (e.g., sucked) into the first section 18 of the chamber 14 through the suction valve 32 of the first section 18. Accordingly, the first section 18 fills with the fluid (e.g., air).

Further, as the piston 12 moves toward the second section 20 of the chamber 14 in FIG. 2, the volume of the second section 20 decreases. Thus, fluid (e.g., air) within the second section 20 is compressed as the piston 12 moves toward the second section 20. After the fluid pressure (e.g., air pressure) of the fluid within the second section 20 of the chamber 14 exceeds a threshold pressure of the discharge valve 30 associated with the second section 20, the discharge valve 30 opens. As the discharge valve 30 opens, the discharge valve 30 enables fluid communication between the second section 20 of the chamber 14 and the discharge manifold 36 coupled with the cylinder 16 at the discharge valve 30. Due to the pressure differential between the fluid (e.g., air) in the second section 20 of the chamber 14 and in the discharge manifold 36, the compressed fluid (e.g., compressed air) within the second section 20 flows toward and into the discharge manifold 36. The compressed fluid is then exported elsewhere for other purposes, as described above.

Furthermore, the compressor 10 of FIGS. 1 and 2 may be a variable displacement compressor. Thus, a maximum clearance or volume of the sections 18 and 20 may be variable. To accomplish the variable displacement, a head 38 may extend the chamber 14 by adding additional volume to the chamber. In other words, the head 38 may act as a wall of the chamber 14. To ensure no leakages, the head 38 may include one or more gaskets 39 or other inhibitors that reduce or block flow of gas around the head 38. The head 38 may slidingly move to adjust the volume of the chamber 14 using a screw 40 that adjusts the location of the head 38 within the compressor 10. The screw 40 may urge the head 38 in either direction to one of multiple locations having corresponding volumes using a control device 42 (e.g., handle) that controls an amount of clearance in the compressor to adjust a maximum volume of the chamber 14.

By expanding a maximum volume of the chamber 14, the compressor 10 effectively increases a re-expansion period because the larger volume of fluid trapped in the cylinder needs to move further during the piston 26 stroke to re-expand out to suction pressure. On the compression cycle, the piston 26 also travels further along the stroke to reach discharge pressure as there is more volume to pressurize. The ratio of discharge stroke distance with a valve open (or suction stroke distance with valve open) over total stroke distance is the discharge (or suction) volumetric efficiency. The smaller volumetric efficiency (VE) of a cylinder, the smaller the effective displacement. Reducing the VE, reduces horsepower consumption (area inside of curve) and capacity moved.

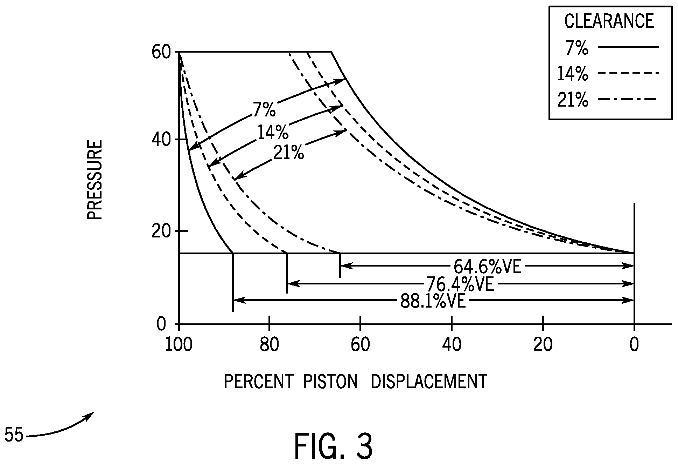

For a gas gathering application, when the displacement is increased, the flowrate of fluid (Q) will be reduced and the suction pressure will increase (assuming no pressure restriction / control on wellhead or package). FIG. 3 illustrates an embodiment 55 of a theoretical production curve. As illustrated, as the clearance increases, so does the piston 26 displacement with a direct relationship between the piston 26 displacement and pressure.

In some embodiments, the volume inside the compressor 10 may be difficult to determine since the volume is variable. Some embodiments may include gauges 43 (e.g., ruler) on the control device 42, screw 40, or other part of the compressor that attempts to estimate the volume of the additional portion 44 with or without the volume of the chamber 14 included, but these attempts may not be accurate. Since volume may be difficult to determine, flow may also be difficult to determine. In some cases, individual flow sensors for each gas compressor unit may be impractical and expensive. Instead, a virtual flow sensor systems may be used to determine flow and/or volumetric efficiency. In some embodiments, these virtual flow sensor systems may be implemented using vibration sensors and performing analysis on the vibration sensor data.

Returning to FIGS. 1 and 2, the reciprocating compressor 10 (or a control system thereof) may include four vibration sensors 60, each vibration sensor 60 being associated with one of the four discharge or suction valves 30, 32. Additionally or alternatively, one vibration sensor 60 may be used on either side of the compressor 10. For example, a single vibration sensor 60 may be used to determine when a suction valve 30 and an discharge valve 32 on a common side of the compressor 10 have opened and/or closed, and another vibration sensor 60 may be used to determine when a suction valve 30 and an discharge valve 32 on the other side of the compressor 10 have opened and/or closed.

Additionally or alternatively, a single knock 60 sensor may be used to determine when any of the suction valves 30 have opened and/or closed while a second vibration sensor 60 may be used to determine when any of the discharge valves 32 have opened and/or closed. Alternatively, one vibration sensor 60 may monitor all four of the suction and discharge valves 30, 32. The vibration sensors 60 in the illustrated embodiment may be a Piezo-electric accelerometers, microelectromechanical system (MEMS) sensors, Hall effect sensors, magnetostrictive sensors, and/or any other sensors designed to sense vibration, acceleration, sound, and/or movement (e.g., of the valves 30, 32). In other embodiments, the sensors 60 may not be vibration sensors in the traditional sense, but any sensors (e.g., laser sensors) that may sense vibration, pressure, acceleration, deflection, proximity, and/or movement. Because of the percussive nature of the reciprocating compressor 10, the vibration sensor(s) 60 may be capable of detecting noise signatures when mounted on an interior or on an exterior of the cylinder 16.

The reciprocating compressor 10 may also include a compressor control unit (CCU) 50, which includes a processor 52 and memory 54. The memory 54 includes non-transitory, tangible, computer-readable medium storing instructions that are configured to cause the processor 52 to perform specific actions, such as the processes discussed herein.

The CCU 50 is communicatively coupled with each of the vibration sensors 60. The memory 54 of the CCU 50 may store computer instructions that may be executed by the processor 52 of the CCU 50. In general, the CCU 50 monitors and controls operation of the reciprocating compressor 10, for example, by monitoring openings and/or closures of the discharge and/or suction valves 30, 32.

Advantageously, the techniques described herein may use the CCU 50 to receive data from the vibration sensors 60, and then to create a "noise" signature by plotting the vibration sensor 60 data against time. The CCU 50 may then go through the process of analyzing the data to derive normal (e.g., known and expected noises) and, in some embodiments, abnormal signatures (e.g., unknown or unexpected noises). The CCU 50 may then characterize the signatures, as described in more detail below. By providing for signature analysis, the techniques described herein may enable a more optimal and a more efficient operation and maintenance of the reciprocating compressor 10. For example, by analyzing time delays or periods of time between cycles of closures of a single discharge or suction valve 30, 32, the CCU 50 may determine whether the valve 30, 32 is closing at an appropriate time. Additionally or alternatively, by analyzing time delays or periods of time between closures of two different discharge and/or suction valves 30, 32, the CCU 50 may determine whether the valves 30, 32 are closing at appropriate times relative to one another. In certain embodiments, the CCU 50 may be a system external to the compressor 10, such as an external computing system.

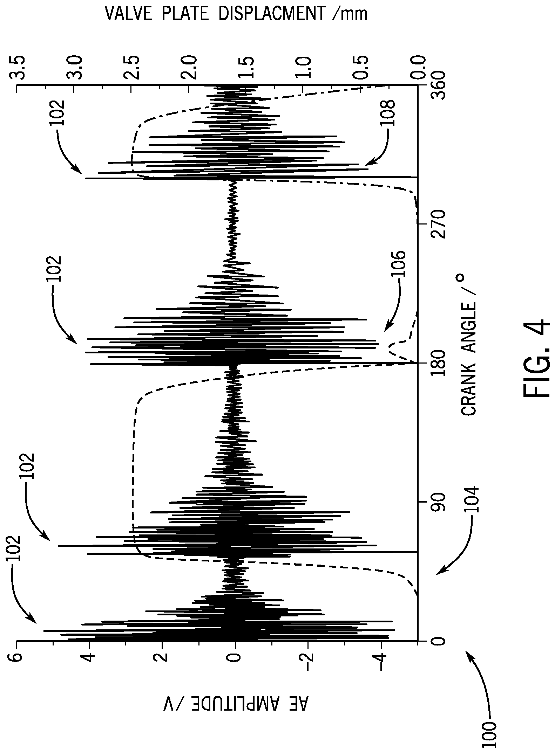

FIG. 4 illustrates an embodiment of a graph 100 showing correspondence between data measured at the vibration sensor(s) 60 against the crank angle displacement of the suction valve 30 against the crank angle displacement of the discharge valve 32. As illustrated, each "knock" 102 may correspond to an opening or closing of a respective valve. For example, the knocks 102 may sequentially correspond to a suction valve 30 opening 104, the suction valve 30 closing 106, and an discharge valve 32 opening 108. Using these periods of time, information about the compressor may be determined. For example, opening and closing of a single suction valve 30 may be used to estimate volumetric efficiency (VE). VE is the ratio of the volume of the fluid drawn into the cylinder (during the suction stroke) to the volume of the cylinder. In other words, VE is the ratio of the volume of fluid actually displaced by the piston 26 to its swept volume. The swept volume may determined using Equation 1:

$$SV = \pi r_b{}^2 * S \qquad\qquad (\text{Equation 1})$$

, where $r_b$ is the radius of the bore 26 and S is the stroke of the piston 26. In other words, the swept volume is the volume of a cylinder through which the piston 26 travels during a suction or discharge stroke. Since the VE is a ratio of the actual volume displaced to volume within the bore, the volume within the bore may be calculated as well. The volume of the bore may be calculated using Equation 2:

$$V_b = \pi r_b{}^2 * l_b \qquad\qquad (\text{Equation 2})$$

, where $l_b$ is the physical displacement length of the piston. VE may be estimated using Equation 3:

$$VE = \frac{SV}{V_b} * 100 = \frac{\pi r_b{}^2 * S}{\pi r_b{}^2 * l_b} * 100 \qquad\qquad (\text{Equation 3})$$

Furthermore, $\pi r_b{}^2$ may be canceled in the numerator and the denominator of Equation 3 to form Equation 4:

$$VE = \frac{S}{l_b} * 100 \qquad\qquad (\text{Equation 4})$$

Moreover, the stroke length may be estimated as the movement of the piston 26 while one or more suction valves 30 are open in a suction stroke. In some embodiments, this length may be determined by determining an angular position of the crankshaft when a detected opening (or closing) of a respective valve has occurred. Thus, the positions of the piston 26 during the detected valve events may be used to estimate volumetric efficiency.

It is worth noting that the foregoing and following equations may further be modified with additional calibration factors to account for flow restrictions (e.g., valve partially open), pressure losses, or other flow factors.

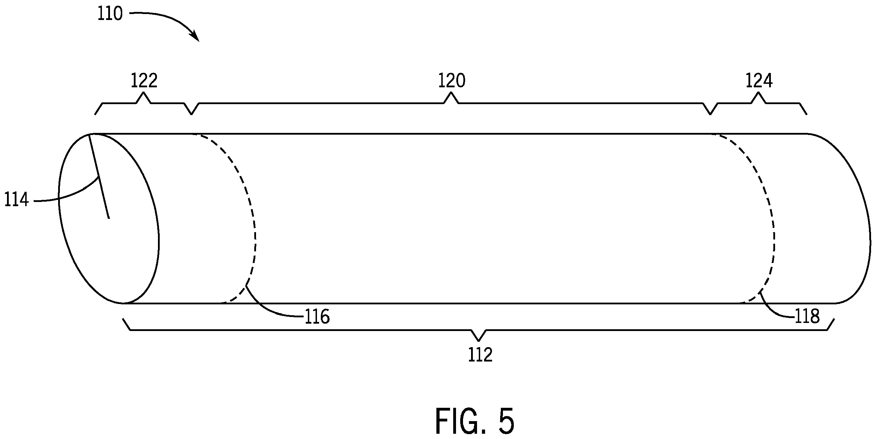

FIG. 5 illustrates a diagram of the portions of a bore 110 that are located within the compressor 10. The volume of the bore 110 may be calculated using a length 112 corresponding to a physical displacement length of the piston (e.g., twice a crank radius) and a radius 114 of the bore. During a stroke of the piston 26, a valve (e.g., suction valve 30) may be determined to have opened at a first piston location 116 and closing at a second piston location 118. The distance 120 traveled between first piston location 116 and the second piston location 118 with the valve open may be estimated as the stroke length 120 for Equation 4 above. Some portions, such as portion 122 and/or 124, along the length of the bore corresponding to physical displacement length of the piston 112 may not suction fluid while the piston 26 traverses these areas reducing the volumetric efficiency of the compressor 10. These regions correspond to volume of fluid that is not drawn into the bore during a suction stroke and/or not dispelled from the bore during a discharge stroke. The remaining volume of fluid taken into the bore 110 along the stroke length 120 to be displaced is approximately proportional to the total volume of the bore as the stroke length is proportional to the a physical displacement length of the piston. Thus, the volumetric efficiency may be estimated using virtual flow sensor systems that determine when flow of fluid has occurred and/or ceased.

Along with other information that may be directly measured, flow may be determined from the estimated VE without an actual physical flow sensor and without knowing an exact volume of the reciprocating compressor 10. A volumetric flow rate (Q) may be calculated using the following Equation 5:

$$Q = 0.0509 \frac{P_s}{T_s} \frac{Z_{std}}{Z_s} (DISP) \left[ 1 - CL \left( R^{1/N} - 1 \right) \right] \qquad \text{(Equation 5)}$$

, where $P_s$ is the pressure of suction, $T_s$ is the temperature at suction, $Z_{std}$ is the compressibility factor of the fluid at standard conditions, $Z_s$ is the compressibility factor of the fluid at actual conditions at suction, DISP is the displacement of the cylinder, CL is the clearance amount as a decimal fraction of displaced volume, R is the pressure ratio across the cylinder, and N is isentropic volume exponent at operating conditions.

The volumetric efficiency is proportional to the volumetric flow rate and may be determined using the following Equation 6:

$$VE = 1 - CL \left( R^{1/N} - 1 \right) \qquad \text{(Equation 6)}$$

In other words, the VE be substituted into the flow rate equation as illustrated in Equation 7

$$Q = 0.0509 \frac{P_s}{T_s} \frac{Z_{std}}{Z_s} (DISP) * VE \qquad \text{(Equation 7)}$$

Thus, by estimating the VE using the flow sensors and the position of the piston 26, the flow through the compressor 10 may be estimated using properties about the fluid, such as pressure, temperature, and compressibility factor along with a displacement property pertaining to the compressor 10. Furthermore, these measurements may be made using virtual flow sensor systems rather than direct flow sensors that may be financially impractical, unreliable, and/or difficult to implement.

Although the foregoing discussion has dealt with volumetric efficiency and flow through a suction valve, it is worth noting that similar principles may be applied to a discharge valve and state to determine a "discharge efficiency" instead of the volumetric efficiency. In other words, the volumetric efficiency equations may be modified to replace measurements at suction with measurements at discharge. For example, the temperature at suction may be replaced with temperature at discharge. The volumetric efficiency attempts to measure efficiency from the suction side in a flowing direction, and the discharge efficiency attempts to measure efficiency from the discharge side from an opposite direction. In other words, the efficiency and/or flow of the compressor may be determined using a suction valve using volumetric efficiency or may be determined using a discharge valve using discharge efficiency.

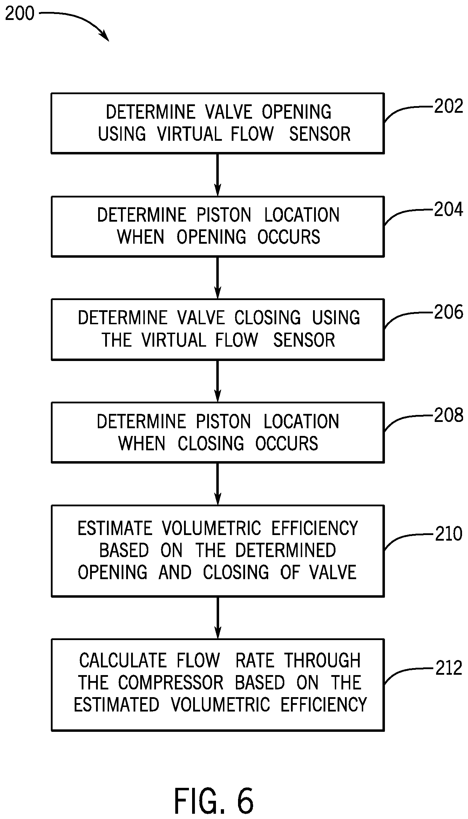

FIG. 6 illustrates a process 200 that may be used to determine flow characteristics or power of the compressor 10. During operation of the compressor 10, the CCU 50 determines when a valve (e.g., valve 30) has opened at a first time (block 202). For example, the sensor 60 sends data that indicates that the valve has opened. The CCU 50 then determines a first location of the piston 26 at the first time (block 204). As the piston 26 moves, the valve will close. The CCU 50 tracks when this valve closes at a second time (block 206). For example, the sensor 60 sends data that indicates that the valve has closed. The CCU 50 determines a second location of the piston 26 at the second time (block 208). The CCU 50 estimates a volumetric efficiency for the compressor 10 based on the determined opening and closing of the valve (block 210). For example, the CCU 50 may determine the volumetric efficiency using Equation 8:

$$VE = \frac{|D_o - D_c|}{l_b} * 100 \qquad\qquad (\text{Equation 8})$$

, where $D_o$ is the distance to the first location at opening and $D_c$ is the distance to the second location.

The CCU 50 uses the volumetric efficiency to operate the compressor 10. If volumetric efficiency is below a threshold value, the CCU 50 increases RPM for the compressor 10. The CCU 50 may also include other indicators for operating the compressor 10. For example, the CCU 50 may calculate a flow rate through the compressor 10 based at least in part on the estimated volumetric efficiency (block 212). These additional operational indicators (e.g., flow rate) may be determined using additional measurements such as temperature, pressure, or other sensed values in addition to the volumetric efficiency. These additional operational indicators may be used to operate the compressor 10 in addition to or in place of the volumetric efficiency. Furthermore, since flow through a cylinder of a compressor may be determined on each stage of a multi-stage compressor, leakage through multi-stage compressors may be derived from such measurements. For example, if flow drops more than a threshold percentage from a first stage to a second stage, the loss in flow may be attributed to a leak in the first stage, a leak in the second stage, and/or between the first and second stages.

**Claims**

1.  A method for monitoring reciprocating compressor (10) operation, comprising:

    determining a valve opening of a valve disposed in the reciprocating compressor using a sensor (60);
    determining a first location of a piston (12) of the reciprocating compressor at the valve opening;
    determining a valve closing of the valve using the sensor;
    determining a second location of the piston at the valve closing; and
    estimating a volumetric efficiency based at least in part on the first and second location, **characterized in that** if the volumetric efficiency is below a threshold value, a controller (50) increases RPM for the compressor (10).

2.  The method of claim 1, wherein the sensor comprises a vibration sensor or/and a proximity sensor.

3.  The method of claim 1, wherein estimating the volumetric efficiency comprises the following equation:

$$VE = \frac{|D_o - D_c|}{l_b} * 100$$

where $D_o$ is the distance to the first location from an end of a bore (110) in which the piston travels, $D_c$ is the distance to the second location from the end of the bore, and $l_b$ is a physical displacement length of the piston.

4.  The method of claim 1, comprising calculating flow rate through the reciprocating compressor based at least in part on the estimated volumetric efficiency.

5.  The method of claim 3, wherein calculating the flow rate comprises using the following equation:

$$Q = 0.0509 \frac{P_s}{T_s} \frac{Z_{std}}{Z_s} (DISP) * VE$$

where $P_s$ is a pressure of suction, $T_s$ is a temperature at suction, $Z_{std}$ is a compressibility factor of the fluid being compressed at standard conditions, $Z_s$ is a compressibility factor of the fluid at actual conditions around the reciprocating compressor, and DISP is a displacement of the reciprocating compressor.

6.  The method of claim 4, comprising operating the reciprocating compressor based at least in part on the calculated flow rate.

7.  A system, comprising:

    a reciprocating compressor (10) having a piston (12) and a valve (30); and

a controller (50) configured to monitor valve closures of the valve, wherein the controller comprises a processor configured to:

receive an indication of the valve opening from a sensor coupled to the reciprocating compressor;
determine a first location of the piston at the valve opening;
receive an indication of the valve closing from the sensor;
determine a second location of the piston at the valve closing; and
estimate a volumetric efficiency based at least in part on the first and second location, **characterized in that** if the volumetric efficiency is below a threshold value, a controller (50) increases RPM for the compressor (10).

8. The system of claim 7, wherein the sensor comprises a vibration sensor or/and a proximity sensor.

9. The system of claim 7, wherein the controller is configured to calculate flow rate through the reciprocating compressor based at least in part on the estimated volumetric efficiency

10. The system of claim 7, wherein valve comprises a suction valve of a chamber of the reciprocating compressor or a discharge valve of a chamber of the reciprocating compressor.

11. A non-transitory computer-readable medium comprising executable instructions that, when executed, cause a processor to:

receive an indication of a valve opening of a valve of a reciprocating compressor (10) from a sensor (60) coupled to the reciprocating compressor;
determine a first location of a piston (12) of the reciprocating compressor at the valve opening;
receive an indication of the valve closing from the sensor;
determine a second location of the piston at the valve closing; and
estimate a volumetric efficiency for the reciprocating compressor based at least in part on the first and second location,
**characterized in that** if the volumetric efficiency is below a threshold value, a controller (50) increases RPM for the compressor (10)

12. The non-transitory, computer-readable medium of claim 11, wherein the sensor comprises a vibration sensor and/or wherein estimating the volumetric efficiency is based on a distance between the first and second locations.

**Patentansprüche**

1. Verfahren zum Überwachen des Betriebes eines Hubkolbenkompressors (10), umfassend: Bestimmen eines Ventilöffnens eines Ventils, das in dem Hubkolbenkompressor angeordnet ist, unter Verwendung eines Sensors (60); Bestimmen einer ersten Stellung eines Kolbens (12) des Hubkolbenkompressors während des Ventilöffnens; Bestimmen eines Ventilschließens des Ventils unter Verwendung des Sensors; Bestimmen einer zweiten Stellung des Kolbens während des Ventilschließens; und Schätzen eines volumetrischen Wirkungsgrades mindestens zum Teil anhand der ersten und zweiten Stellung,
**dadurch gekennzeichnet, dass**:
falls der volumetrische Wirkungsgrad unterhalb eines Schwellenwertes liegt, ein Controller (50) die U/min für den Kompressor (10) erhöht.

2. Verfahren nach Anspruch 1, wobei der Sensor einen Vibrationssensor und/oder einen Näherungssensor umfasst.

3. Verfahren nach Anspruch 1, wobei das Schätzen des volumetrischen Wirkungsgrades die folgende Gleichung umfasst:

$$VE = \frac{|D_o - D_c|}{l_b} * 100$$

wobei $D_o$ die Distanz zu der ersten Stellung von einem Ende einer Bohrung (110) ist, in der sich der Kolben bewegt,

$D_c$ die Distanz zu der zweiten Stellung von dem Ende der Bohrung ist, und $I_b$ eine physische Hublänge des Kolbens ist.

4.  Verfahren nach Anspruch 1, das das Berechnen einer Strömungsrate durch den Hubkolbenkompressor mindestens zum Teil anhand des geschätzten volumetrischen Wirkungsgrades umfasst.

5.  Verfahren nach Anspruch 3, wobei das Berechnen der Strömungsrate die Verwendung der folgenden Gleichung umfasst:

$$Q = 0.0509 \frac{P_s}{T_s} \frac{Z_{std}}{Z_s} (DISP) * VE$$

wobei $P_s$ ein Ansaugdruck ist, $T_s$ eine Temperatur während des Ansaugens ist, $Z_{std}$ ein Kompressionsmodel des Fluids bei einer Kompression unter Standardbedingungen ist, Zs ein Kompressionsmodul des Fluids bei tatsächlichen Bedingungen in der Umgebung des Hubkolbenkompressors ist, und DISP ein Fördervolumen des Hubkolbenkompressors ist.

6.  Verfahren nach Anspruch 4, das das Betreiben des Hubkolbenkompressors mindestens zum Teil anhand der berechneten Strömungsrate umfasst.

7.  System, das Folgendes umfasst:

    einen Hubkolbenkompressor (10), der einen Kolben (12) und ein Ventil (30) aufweist; und
    einen Controller (50), der dazu konfiguriert ist, Ventilschließungen des Ventils zu überwachen, wobei der Controller einen Prozessor umfasst, der dazu konfiguriert ist:

    Empfangen eines Hinweises auf das Ventilöffnen von einem Sensor, der mit dem Hubkolbenkompressor gekoppelt ist;
    Bestimmen einer ersten Stellung des Kolbens während des Ventilöffnens;
    Empfangen eines Hinweises auf das Ventilschließen von dem Sensor;
    Bestimmen einer zweiten Stellung des Kolbens während des Ventilschließens; und
    Schätzen eines volumetrischen Wirkungsgrades mindestens zum Teil anhand der ersten und zweiten Stellung,
    **dadurch gekennzeichnet, dass**:
    falls der volumetrische Wirkungsgrad unterhalb eines Schwellenwertes liegt, ein Controller (50) die U/min für den Kompressor (10) erhöht.

8.  System nach Anspruch 7, wobei der Sensor einen Vibrationssensor und/oder einen Näherungssensor umfasst.

9.  System nach Anspruch 7, wobei der Controller dazu konfiguriert ist, die Strömungsrate durch den Hubkolbenkompressor mindestens zum Teil anhand des geschätzten volumetrischen Wirkungsgrades zu berechnen.

10. System nach Anspruch 7, wobei das Ventil ein Ansaugventil einer Kammer des Hubkolbenkompressors oder ein Auslassventil einer Kammer des Hubkolbenkompressors umfasst.

11. Nicht-transitorisches computerlesbares Medium, das ausführbare Instruktionen umfasst, die, wenn sie ausgeführt werden, einen Prozessor zu Folgendem veranlassen:

    Empfangen eines Hinweises auf ein Ventilöffnen eines Ventils eines Hubkolbenkompressors (10) von einem Sensor (60), der mit dem Hubkolbenkompressor gekoppelt ist;
    Bestimmen einer ersten Stellung eines Kolbens (12) des Hubkolbenkompressors während des Ventilöffnens;
    Empfangen eines Hinweises auf das Ventilschließen von dem Sensor; Bestimmen einer zweiten Stellung des Kolbens während des Ventilschließens; und
    Schätzen eines volumetrischen Wirkungsgrades für den Hubkolbenkompressor mindestens zum Teil anhand der ersten und zweiten Stellung,
    **dadurch gekennzeichnet, dass**:
    falls der volumetrische Wirkungsgrad unterhalb eines Schwellenwertes liegt, ein Controller (50) die U/min für den Kompressor (10) erhöht.

**12.** Nicht-transitorisches, computerlesbares Medium nach Anspruch 11, wobei der Sensor einen Vibrationssensor umfasst, und/oder wobei das Schätzen des volumetrischen Wirkungsgrades auf einer Distanz zwischen der ersten und der zweiten Stellung basiert.

**Revendications**

**1.** Procédé de surveillance de fonctionnement d'un compresseur alternatif (10), comprenant :

   la détermination d'une ouverture de soupape d'une soupape disposée dans le compresseur alternatif à l'aide d'un capteur (60) ;
   la détermination d'un premier emplacement d'un piston (12) du compresseur alternatif à l'ouverture de soupape ;
   la détermination d'une fermeture de soupape de la soupape à l'aide du capteur ;
   la détermination d'un second emplacement du piston à la fermeture de soupape ; et
   l'estimation d'un rendement volumétrique sur la base au moins en partie des premier et second emplacements, **caractérisé en ce que** si le rendement volumétrique est au-dessous d'une valeur seuil, un contrôleur (50) augmente le nombre de tours par minute (RPM) du compresseur (10).

**2.** Procédé selon la revendication 1, dans lequel le capteur comprend un capteur de vibrations et/ou un capteur de proximité.

**3.** Procédé selon la revendication 1, dans lequel l'estimation du rendement volumétrique comprend l'équation suivante :

$$VE = \frac{|D_o - D_c|}{l_b} * 100$$

où $D_o$ est la distance au premier emplacement à partir d'une extrémité d'un alésage (110) dans lequel le piston se déplace, $D_c$ est la distance au second emplacement à partir de l'extrémité de l'alésage, et $l_b$ est une longueur de déplacement physique du piston.

**4.** Procédé selon la revendication 1, comprenant le calcul du débit traversant le compresseur alternatif sur la base au moins en partie du rendement volumétrique estimé.

**5.** Procédé selon la revendication 3, dans lequel le calcul du débit comprend l'utilisation de l'équation suivante :

$$Q = 0{,}0509 \frac{P_s}{T_s} \frac{Z_{std}}{Z_s} (DISP) * VE$$

où $P_s$ est une pression d'aspiration, $T_s$ est une température à l'aspiration, $Z_{std}$ est un facteur de compressibilité du fluide compressé dans des conditions normales, $Z_s$ est un facteur de compressibilité du fluide dans des conditions réelles autour du compresseur alternatif, et DISP est un déplacement du compresseur alternatif.

**6.** Procédé selon la revendication 4, comprenant l'actionnement du compresseur alternatif sur la base au moins en partie du débit calculé.

**7.** Système, comprenant :

   un compresseur alternatif (10) ayant un piston (12) et une soupape (30) ; et
   un contrôleur (50) configuré pour surveiller des fermetures de soupape de la soupape, dans lequel le contrôleur comprend un processeur configuré pour :

      recevoir une indication de l'ouverture de soupape à partir d'un capteur couplé au compresseur alternatif ;
      déterminer un premier emplacement du piston à l'ouverture de soupape ;
      recevoir une indication de la fermeture de soupape à partir du capteur ;
      déterminer un second emplacement du piston à la fermeture de soupape ; et
      estimer un rendement volumétrique sur la base au moins en partie des premier et second emplacements,

**caractérisé en ce que** si le rendement volumétrique est au-dessous d'une valeur seuil, un contrôleur (50) augmente le nombre de tours par minute (RPM) du compresseur (10).

8. Système selon la revendication 7, dans lequel le capteur comprend un capteur de vibrations et/ou un capteur de proximité.

9. Système selon la revendication 7, dans lequel le contrôleur est configuré pour calculer le débit traversant le compresseur alternatif sur la base au moins en partie du rendement volumétrique estimé.

10. Système selon la revendication 7, dans lequel la soupape comprend une soupape d'aspiration d'une chambre du compresseur alternatif ou une soupape de refoulement d'une chambre du compresseur alternatif.

11. Support non transitoire lisible par ordinateur comprenant des instructions exécutables qui, lorsqu'elles sont exécutées, amènent un processeur à :

recevoir une indication d'une ouverture de soupape d'une soupape d'un compresseur alternatif (10) à partir d'un capteur (60) couplé au compresseur alternatif ;
déterminer un premier emplacement d'un piston (12) du compresseur alternatif à l'ouverture de soupape ;
recevoir une indication de la fermeture de soupape à partir du capteur ;
déterminer un second emplacement du piston à la fermeture de soupape ; et
estimer un rendement volumétrique pour le compresseur alternatif sur la base au moins en partie des premier et second emplacements,
**caractérisé en ce que** si le rendement volumétrique est au-dessous d'une valeur seuil, un contrôleur (50) augmente le nombre de tours par minute (RPM) du compresseur (10).

12. Support non transitoire lisible par ordinateur selon la revendication 11, dans lequel le capteur comprend un capteur de vibrations et/ou dans lequel l'estimation du rendement volumétrique est basée sur une distance entre les premier et second emplacements.

FIG. 1

FIG. 2

FIG. 3

EP 3 315 776 B1

VALVE PLATE DISPLACMENT /mm

AE AMPLITUDE /V

CRANK ANGLE /°

FIG. 4

FIG. 5

200

| DETERMINE VALVE OPENING USING VIRTUAL FLOW SENSOR | —202 |

| DETERMINE PISTON LOCATION WHEN OPENING OCCURS | —204 |

| DETERMINE VALVE CLOSING USING THE VIRTUAL FLOW SENSOR | —206 |

| DETERMINE PISTON LOCATION WHEN CLOSING OCCURS | —208 |

| ESTIMATE VOLUMETRIC EFFICIENCY BASED ON THE DETERMINED OPENING AND CLOSING OF VALVE | —210 |

| CALCULATE FLOW RATE THROUGH THE COMPRESSOR BASED ON THE ESTIMATED VOLUMETRIC EFFICIENCY | —212 |

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4705459 A